(19) Europäisches Patentamt
European Patent Office
Office européen des brevets

(11) **EP 3 165 590 A1**

(12) **EUROPEAN PATENT APPLICATION**
published in accordance with Art. 153(4) EPC

(43) Date of publication:
**10.05.2017 Bulletin 2017/19**

(21) Application number: **15815608.3**

(22) Date of filing: **30.06.2015**

(51) Int Cl.:
***C10M 169/04*** (2006.01) ***C10M 105/18*** (2006.01)
***C10M 107/02*** (2006.01) ***C10M 115/08*** (2006.01)
***C10M 133/38*** (2006.01) ***F16C 19/06*** (2006.01)
***F16C 33/66*** (2006.01) ***C10N 30/08*** (2006.01)
***C10N 40/02*** (2006.01) ***C10N 50/10*** (2006.01)

(86) International application number:
**PCT/JP2015/068752**

(87) International publication number:
**WO 2016/002739 (07.01.2016 Gazette 2016/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **01.07.2014 JP 2014135545**

(71) Applicant: **NTN Corporation**
**Osaka-shi, Osaka 550-0003 (JP)**

(72) Inventors:
- **KONDOU, Ryouta**
  **Kuwana-shi**
  **Mie 511-0867 (JP)**
- **KAWAMURA, Takayuki**
  **Kuwana-shi**
  **Mie 511-0867 (JP)**
- **MIKAMI, Hidenobu**
  **Kuwana-shi**
  **Mie 511-0867 (JP)**

(74) Representative: **White, Duncan Rohan**
**Marks & Clerk LLP**
**Fletcher House (2nd Floor)**
**Heatley Road**
**The Oxford Science Park**
**Oxford OX4 4GE (GB)**

(54) **LUBRICANT COMPOSITION AND LUBRICANT COMPOSITION-SEALED BEARING**

(57) The present invention provides a lubricant composition which can be used as a lubricant for a rolling component, the composition capable of maintaining enhanced lubrication performance over a long period of time even under high temperature conditions such as temperatures of 180°C or higher, and a rolling bearing including the lubricant composition sealed therein. A lubricant composition-sealed bearing 1 includes a lubricant composition 7 that is sealed in the peripheries of the rolling bodies 4. The lubricant composition 7 contains a base oil and an antioxidant. The base oil is an oil mixture of an alkyl diphenyl ether oil and at least one oil selected from a poly-α-olefin oil and an ester oil, and contains the alkyl diphenyl ether oil in an amount of 50% or more by weight of the total base oil. The antioxidant is 2,2,4-trimethyl-1,2-dihydroquinoline or a polymer thereof, and is contained in an amount of 0.1% to 10% by weight of the total lubricant composition.

Fig. 1

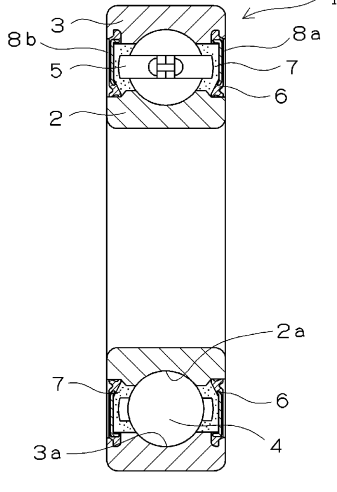


EP 3 165 590 A1

## Description

TECHNICAL FIELD

The present invention relates to a lubricant composition, particularly to a lubricant composition for lubricating a bearing or other rolling components that may be used under high temperature conditions (for example, temperatures of 180°C or higher). The present invention also relates to a rolling bearing including the lubricant composition sealed therein.

BACKGROUND ART

In the industry, there have been attempts to improve performance of a lubricant for rolling components such as a rolling bearing by incorporating various additives into the lubricant. When a rolling bearing or the like is operated under high temperature conditions, a lubricant oil or a grease sealed in the bearing may be subjected to oxidative deterioration that is likely to accelerate breakage of a lubricating film, and thus the life of lubrication may be shortened. Especially, a lubricating film is more likely to be broken under high-temperature and high-speed conditions. The breakage of a lubricating film causes metal surfaces of rolling components to be contacted each other, thereby leading to problems such as increased frequency of heat generation and frictional wear. Therefore, in order to enhance the high-temperature endurance of lubricant oils or greases for rolling bearings or the like, one or more antioxidants such as an amine antioxidant, a phenolic antioxidant and an organozinc compound have been used alone or in combination of two or more.

For example, there has been proposed the use of phenolic antioxidants such as 2,2'-methylenebis(6-tert-butyl-4-methylphenol), amine antioxidants such as octylated diphenylamine, and sulfur antioxidants such as phenothiazine in a lubricant for a bearing (see Patent Document 1). Further, in an attempt to provide a grease composition for rolling bearings used in motors with reduced torque and noise, there has been proposed the use of a low-viscosity ester oil as a base oil, a metal soap as a thickener, and a combination of liquid hindered amine and triphenyl phosphorothionate as an antioxidant (see Patent Document 2).

PRIOR ART DOCUMENTS

PATENT DOCUMENTS

Patent Document 1: JP 2005-188557 A
Patent Document 2: JP 2012-162657 A

SUMMARY OF THE INVENTION

PROBLEM TO BE SOLVED BY THE INVENTION

The use of such antioxidants as described in Patent Document 1 or 2, however, may not always provide sufficient performance in high-temperature endurance, depending on the type of base oil to be used in combination with the antioxidant, temperature conditions at the time of lubrication, and so on. For instance, a phenyl ether synthetic oil which is one of base oils of lubricants has good thermal and oxidative stabilities; however, when used under high temperature conditions such as temperatures of 180°C or higher, a lubricant containing such an oil may be incapable of providing sufficient high-temperature endurance, depending on the type of antioxidant employed.

The present invention is directed to overcoming the above-mentioned problems. It is an object of the present invention to provide a lubricant composition which can be used as a lubricant for a rolling component, the composition capable of maintaining enhanced lubrication performance over a long period of time even under high temperature conditions such as temperatures of 180°C or higher, and a rolling bearing including the lubricant composition sealed therein.

MEANS FOR SOLVING THE PROBLEM

The present invention provides a lubricant composition used for lubricating a rolling component, containing a base oil and an antioxidant, wherein the base oil is an oil mixture of an alkyl diphenyl ether oil and at least one oil selected from a poly-$\alpha$-olefin (hereinafter also referred to as "PAO") oil and an ester oil, and contains the alkyl diphenyl ether oil in an amount of 50% or more by weight of the total base oil; and the antioxidant is a compound represented by the

following formula (1) or a polymer thereof, and is contained in an amount of 0.1% to 10% by weight of the total lubricant composition:

[Chemical Formula 1]

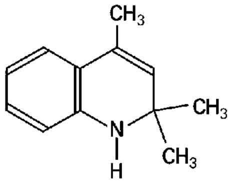

(1)

.

The base oil may contain the alkyl diphenyl ether oil in an amount of 70% to 90% by weight of the total base oil. The base oil may be an oil mixture of the alkyl diphenyl ether oil and the poly-α-olefin oil. The alkyl diphenyl ether oil may have a kinetic viscosity at 40°C of 60 to 120 $mm^2/s$.

The lubricant composition may be a grease containing a urea compound as a thickener.

The lubricant composition may be used under a high temperature condition of 180°C or higher.

The present invention provides a lubricant composition-sealed bearing including the lubricant composition of the present invention sealed in a region to be lubricated.

EFFECT OF THE INVENTION

The lubricant composition of the present invention is obtained by adding, as an antioxidant, a predetermined quinoline antioxidant to a base oil mixture containing a predetermined phenyl ether synthetic oil as a main ingredient. Therefore, the present invention can reduce oxidative deterioration of the lubricant in use under a high temperature condition of 180°C or higher over a long period of time and thereby extend a lubricant life, as compared with other lubricants obtained by adding a different antioxidant to the same base oil. As a result, the present invention can increase the service life of a bearing or a similar rolling component including the lubricant composition sealed therein.

BRIEF DESCRIPTION OF THE DRAWINGS

Fig. 1 is a sectional view of a deep groove ball bearing shown as an example of a lubricant composition-sealed bearing of the present invention.
Fig. 2 shows results of high temperature exposure tests.
Fig. 3 shows results of high temperature exposure tests.
Fig. 4 shows results of high temperature exposure tests.

MODE FOR CARRING OUT THE INVENTION

The lubricant composition of the present invention is used for lubricating a rolling component. In particular, the lubricant composition is used in a rolling bearing, a gear, or a component part thereof, and the composition is sealed in a region of the bearing or the like which is to be lubricated. It is envisaged that the lubricant composition is used at a temperature of, for example, 150°C or higher, particularly 180°C or higher, up to about 200°C. That is, the temperature range for the use of the composition is, for example, 150°C to 200°C, more particularly 180°C to 200°C.

The present invention includes two embodiments of lubricant composition as follows: (A) a lubricant oil containing a predetermined base oil and a predetermined quinoline antioxidant as essential components; and (B) a grease containing a predetermined base oil, a thickener, and a predetermined quinoline antioxidant as essential components.

The quinoline antioxidant used in the present invention is a compound represented by formula (1), namely 2,2,4-trimethyl-1,2-dihydroquinoline, or a dimeric or higher order condensate (polymer) thereof. A mixture of the compound and polymer may also be used.

[Chemical Formula 2]

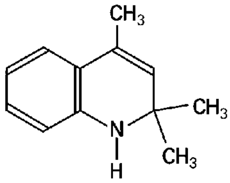

(1)

The polymer corresponds to "TMDQ", an anti-oxidizing agent of JIS K 6211, with physical properties including: a softening point of 80°C to 110°C, a specific gravity of 1.06 to 1.11 and an ash content of 0.5% or less. Examples of commercially available products that can be used in the present invention include VANLUBE RD manufactured by Vanderbilt Chemicals, LLC and NOCRAC (registered trademark) 224 manufactured by Ouchi Shinko Chemical Industrial Co., Ltd.

When the above-mentioned lubricant composition is used as a lubricant oil, the quinoline antioxidant is contained in an amount of 0.1% to 10% by weight of the total lubricant composition. A quinoline antioxidant content of less than 0 .1% by weight may not sufficiently improve the high-temperature endurance. A quinoline antioxidant content of more than 10% by weight may not only fail to improve the performance of the composition, but also cause some problems such as evaporation due to degraded materials of the antioxidant, thus leading to even worse performance in the high-temperature endurance. The amount of the quinoline antioxidant is preferably 0.3% to 10% by weight, more preferably 0.3% to 5% by weight, further preferably 0.3% to 2% by weight.

When the above-mentioned lubricant composition is used as a grease, the quinoline antioxidant is contained in an amount of 0.1 to 10 parts by weight based on the total 100 parts by weight of the base oil and thickener. A quinoline antioxidant content of less than 0.1 parts by weight may not sufficiently improve the high-temperature endurance. A quinoline antioxidant content of more than 10 parts by weight may not only fail to improve the performance of the composition, but also cause some problems such as evaporation due to degraded materials of the antioxidant, thus leading to even worse performance in the high-temperature endurance. The amount of the quinoline antioxidant is preferably 0.3 parts to 10 parts by weight, more preferably 0.3 parts to 5 parts by weight, further preferably 0.3 parts to 2 parts by weight.

The lubricant composition of the present invention contains an oil mixture of (X) an alkyl diphenyl ether oil that is an essential ingredient and (Y) at least one oil selected from a PAO oil and an ester oil, and the oil mixture contains the alkyl diphenyl ether oil in an amount of 50% or more by weight of the total base oil. In the base oil mixture, the weight ratio of (X) to (Y) is preferably X : Y = 6 : 4 to 9 : 1, more preferably X : Y = 7 : 3 to 9 : 1, particularly preferably X : Y = 7.5 : 2.5 to 8.5 : 1.5. Especially, when the ratio is X : Y = 7 : 3 to 9 : 1, that is, when the alkyl diphenyl ether oil is contained in an amount of 70% or more by weight of the total base oil, the quinoline antioxidant is more likely to be effective in improving the high-temperature endurance.

Examples of the alkyl diphenyl ether oil as an essential ingredient include a monoalkyl diphenyl ether oil represented by the following formula (2), a dialkyl diphenyl ether oil represented by the following formula (3) and a polyalkyl diphenyl ether.

[Chemical Formula 3]

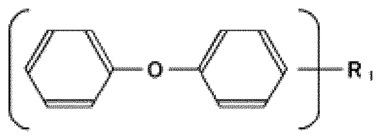

(2)

[Chemical Formula 4]

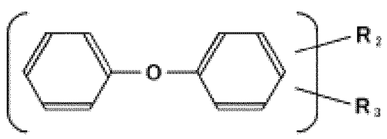

(3)

In the formulae, $R_1$, $R_2$ and $R_3$ each represent an alkyl group having 8 to 20 carbon atoms, and are each bonded

to a phenyl ring or two phenyl rings. Especially, a dialkyl diphenyl ether oil having $R_2$ and $R_3$ is preferable in view of some properties such as heat resistance.

The PAO oil (synthetic hydrocarbon oil) is a mixture of α-olefin or isomerized α-olefin oligomers or polymers. Specific examples of α-olefins include 1-octene, 1-nonene, 1-decene, 1-dodecene, 1-tridecene, 1-tetradecene, 1-pentadecene, 1-hexadecene, 1-heptadecene, 1-octadecene, 1-nonadecene, 1-eicosene, 1-docosene and 1-tetradocosene; a mixture thereof is usually used.

Examples of the ester oil include diester oils such as dibutyl sebacate, di-2-ethylhexyl sebacate, dioctyl adipate, diisodecyl adipate, ditridecyl adipate, ditridecyl glutarate, and methyl acetyl ricinoleate, aromatic ester oils such as trioctyl trimellitate, tridecyl trimellitate and tetraoctyl pyromellitate, polyol ester oils such as trimethylol propane caprylate, trimethylol propane pelargonate, pentaerythritol-2-ethylhexanoate and pentaerythritol pelargonate, carbonate ester oils and phosphate ester oils.

In the base oil of the lubricant composition of the present invention, the alkyl diphenyl ether oil preferably has a kinetic viscosity at 40°C of 50 to 200 $mm^2/s$, more preferably 60 to 120 $mm^2/s$. The total base oil (oil mixture) preferably has a kinetic viscosity at 40°C of 30 to 200 $mm^2/s$, more preferably 60 to 100 $mm^2/s$ in view of low-temperature property and heat resistance.

When the lubricant composition of the present invention is used as a grease, the composition additionally contains a thickener. The thickener used in the present invention is preferably a urea compound because of excellent durability against heat and advantageous performance in intervening into sliding portions of mechanical parts as well as in being adhered to the sliding portions.

The urea compound can be prepared by a reaction between a polyisocyanate component and a monoamine component. Examples of the polyisocyanate component include phenylene diisocyanate, tolylene diisocyanate, diphenyl diisocyanate, diphenylmethane diisocyanate, octadecane diisocyanate, decane diisocyanate and hexane diisocyanate. The monoamine component used in the present invention may be an aliphatic monoamine, an alicyclic monoamine or an aromatic monoamine. Examples of the aliphatic monoamines include hexylamine, octylamine, dodecylamine, hexadecylamine, octadecylamine, stearylamine and oleylamine. Examples of the alicyclic monoamines include cyclohexylamine. Examples of the aromatic monoamine include aniline and p-toluidine.

The thickener such as a urea compound is incorporated into the base oil to obtain a base grease. The base grease containing a urea compound as the thickener is prepared by reacting the polyisocyanate component with the monoamine component in the base oil. The thickener content in the base grease is preferably 1% to 40% by weight, more preferably 3% to 25% by weight. A thickener content of less than 1% by weight results in a poor thickening effect, thereby making it difficult to prepare a suitable grease. A thickener content of more than 40% by weight makes the resultant base grease too hard to give a desired effect.

It is preferred that the grease as described above have a worked penetration (JIS K 2220) within the range of 200 to 350. A worked penetration of less than 200 may reduce oil separation of the grease, thus leading to poor lubricating performance. On the other hand, a grease with a worked penetration of more than 350 is soft, and is undesirable because of easy flowing out from the area in which the grease is sealed.

The lubricant composition may contain one or more known additives other than the above-mentioned quinoline antioxidant as needed, to the extent that the purpose of the present invention is not impaired. Examples of such additives include metal inactivators such as benzotriazole, viscosity index improvers such as polymethacrylate and polystyrene, solid lubricants such as molybdenum disulfide and graphite, anticorrosives such as a metal sulfonate and a polyhydric alcohol ester, oil-based agents such as an ester and an alcohol, and other anti-wear agents. These can be added alone or in combination of two or more.

The composition of the present invention that contains the predetermined quinoline antioxidant with the predetermined base oil can exhibit advantageously improved high-temperature endurance as compared to a composition that contains a different antioxidant alone. Where appropriate, an aromatic amine antioxidant or a phenolic antioxidant may be used as another antioxidant in combination with the quinoline antioxidant.

The lubricant composition-sealed bearing (rolling bearing) including the lubricant composition of the present invention sealed therein will be described below with reference to Fig. 1. Fig. 1 is a sectional view of a deep groove ball bearing. In a rolling bearing 1, an inner wheel 2 having an inner wheel rolling surface 2a on the outer periphery surface and an outer wheel 3 having an outer wheel rolling surface 3a on the inner periphery surface are concentrically positioned, and a plurality of rolling bodies 4 are placed between the inner wheel rolling surface 2a and the outer wheel rolling surface 3a. These rolling bodies 4 are retained by a cage 5. Further, openings 8a and 8b on both the ends in the axis direction of the inner and outer wheels are sealed by a seal member 6. A lubricant composition 7, the composition as described above, is sealed at least in the peripheries of the rolling bodies 4. The inner wheel 2, the outer wheel 3 and the rolling bodies 4 are made of bearing steel which is a ferrous metal. The lubricant composition 7 that is a grease intervenes between the rolling surfaces and the rolling bodies 4 to achieve lubrication.

While Fig. 1 presents a ball bearing as an example of the bearing, the rolling bearing of the present invention may be other bearings such as a cylindrical roller bearing, a conical roller bearing, an automatic aligning roller bearing,

a needle roller bearing, a thrust cylindrical roller bearing, a thrust conical roller bearing, a thrust needle roller bearing, and a thrust automatic aligning roller bearing.

Because the lubricant composition-sealed bearing of the present invention includes the above-mentioned lubricant composition sealed therein, it is possible to reduce oxidative deterioration of the lubricant over a long period of time even under conditions of use at a high temperature of 180°C or higher and a high speed, thereby achieving a long service life of the bearing.

EXAMPLES

The present invention is specifically illustrated, but not limited, by the following examples and comparative examples.

Example 1 and Comparative Examples 1 to 6

Each lubricant composition in Table 1 was evaluated for high-temperature endurance by measuring the rate of weight reduction of the composition which was left at a high temperature. As shown in Table 1, each base oil was an oil mixture of an alkyl diphenyl ether oil and a poly-α-olefin oil at a mixing ratio of 8 : 2 by weight. Each sample of the lubricant composition was left in a constant-temperature bath at 180°C and at 120°C in an air atmosphere for 0, 200, 400, 600, 800 and 1000 hours (up to 600 hours at 120°C). The sample was taken out of the bath and weighed at each time point to determine the rate of weight reduction according to the following formula. The results are shown in Table 1 together with other details. The results of the high temperature exposure tests at 180°C and at 120°C are shown in Figs. 2 and 3, respectively. In the graphs, the horizontal axis represents time of measurement (h) and the vertical axis represents the rate of weight reduction (wt%).

Rate of weight reduction (wt%) = 100 x ("weight (g) of lubricant composition before being left in constant-temperature bath" - "weight (g) of lubricant composition after being left in constant-temperature bath")/"weight (g) of lubricant composition before being left in constant-temperature bath"

[Table 1]

| | Example | Comparative Example | | | | | |
|---|---|---|---|---|---|---|---|
| | 1 | 1 | 2 | 3 | 4 | 5 | 6 |
| Lubricant composition | | | | | | | |
| Base oil | | | | | | | |
| Ether oil[1]) + PAO (Ether oil : PAO oil = 8 : 2) | 99 | 99 | 99 | 99 | 99 | 99 | 100 |
| Additive | | | | | | | |
| Quinoline antioxidant[3]) | 1 | - | - | - | - | - | - |
| Amine antioxidants[4]) | - | 1 | - | - | - | - | - |
| Phenolic antioxidant[5]) | - | - | 1 | - | - | - | - |
| Sodium sulfite | - | - | - | 1 | - | - | - |
| Sodium nitrite | - | - | - | - | 1 | - | - |
| Arginine | - | - | - | - | - | 1 | - |
| Rate of weight reduction | | | | | | | |
| 0 hr. | 0 | 0 | 0 | 0 | 0 | 0 | 0 |
| 200 hrs. | 2.6 | 2.9 | 10.8 | 6.8 | 8.9 | 9.5 | 4.8 |

(continued)

| | | Example 1 | Comparative Example 1 | 2 | 3 | 4 | 5 | 6 |
|---|---|---|---|---|---|---|---|---|
| | 400 hrs. | 6.4 | 6.8 | 17.2 | 11.3 | 13.9 | 13.5 | 8.9 |
| | 600 hrs. | 10.1 | 11.8 | 18.9 | 14.2 | 15.7 | 16.5 | 14.1 |
| | 800 hrs. | 13.0 | 14.2 | 22.7 | 17.3 | 20.2 | 19.1 | 16.3 |
| | 1000 hrs. | 17.1 | 18.3 | 24.9 | 19.4 | 22.3 | 20.8 | 20.5 |
| Rate of weight reduction | | | | | | | | |
| | 0 hr. | 0 | 0 | 0 | - | - | - | 0 |
| | 200 hrs. | 0.1 | 0.2 | 1.2 | - | - | - | 0.2 |
| | 400 hrs. | 0.2 | 0.3 | 1.7 | - | - | - | 0.7 |
| | 600 hrs. | 0.2 | 0.4 | 2.1 | - | - | - | 1.1 |

1) : MORESCO HILUBE LB100 manufactured by MATSUMURA OIL RESEARCH CORP., kinetic viscosity at 40°C: 97 $mm^2/s$
2) : SYNFLUID 801 manufactured by Nippon Steel Chemical Co., Ltd., kinetic viscosity at 40°C: 46 $mm^2/s$
3): 2,2,4-trimethyl-1,2-dihydroquinoline polymer
4): octylated diphenylamine
5): 2,2'-methylenebis(6-tert-butyl-4-methylphenol)

Examples 2 and 3 and Comparative Examples 7 and 8

Each lubricant composition in Table 2 was evaluated for high-temperature endurance by measuring the rate of weight reduction of the composition which was left at a high temperature. As shown in Table 2, each base oil was an oil mixture of an alkyl diphenyl ether oil and a poly-$\alpha$-olefin oil or an ester oil at a mixing ratio (by weight) as indicated in the table. In Table 2, superscripts 1) to 3) are the same as defined in Table 1. Each sample of the lubricant composition was left in a constant-temperature bath at 180°C in an air atmosphere for 0, 200 and 400 hours. The sample was taken out of the bath and weighed at each time point to determine the rate of weight reduction according to the formula described above. The results are shown in Table 2 together with other details. The results of the high temperature exposure tests are shown in Fig. 4 as those of Example 1, etc.

[Table 2]

| | | Example 2 | Example 3 | Comparative Example 7 | Comparative Example 8 |
|---|---|---|---|---|---|
| Lubricant composition (wt%) | | | | | |
| Base oil | Ether oil 1) + PAO oil 2) (Ether oil : PAO oil = 6 : 4) | 99 | - | 100 | - |
| | Ether oil 1) + Ester oil 6) (Ether oil : Ester oil = 8 : 2) | - | 99 | - | 100 |
| Additive | Quinoline antioxidant 3) | 1 | 1 | - | - |
| Rate of weight reduction [180°C] (wt%) | 0 hr. | 0 | 0 | 0 | 0 |
| | 200 hrs. | 8.88 | 2.85 | 13.1 | 3.5 |
| | 400 hrs. | 14.66 | 5.39 | 19.3 | 6.5 |

6): KAOLUBE 262 manufactured by Kao Corporation, kinetic viscosity at 40°C: 33.5 $mm^2/s$

As shown in Tables 1 and 2 and Figs. 2 to 4, the compositions of examples in which the predetermined quinoline antioxidant was added to the base oil mixture containing the alkyl diphenyl ether oil as a main ingredient were confirmed

to exhibit lower rates of weight reduction in the high temperature exposure tests as compared to those obtained with a different antioxidant added to the same base oil, meaning that oxidative deterioration can be suppressed over an extended period of time.

INDUSTRIAL APPLICABILITY

The lubricant composition of the present invention can be suitably applied for lubrication of rolling components such as a bearing for use under high temperature conditions (for example, temperatures of 180°C or higher).

EXPLANATION OF REFERENCE NUMERALS AND SYMBOLS

| | |
|---|---|
| 1 | Rolling bearing |
| 2 | Inner wheel |
| 3 | Outer wheel |
| 4 | Rolling body |
| 5 | Cage |
| 6 | Seal member |
| 7 | Lubricant composition |
| 8a, 8b | Opening |

**Claims**

1. A lubricant composition used for lubricating a rolling component, comprising a base oil and an antioxidant, wherein the base oil is an oil mixture of an alkyl diphenyl ether oil and at least one oil selected from a poly-α-olefin oil and an ester oil, and contains the alkyl diphenyl ether oil in an amount of 50% or more by weight of the total base oil; and
the antioxidant is a compound represented by the following formula (1) or a polymer thereof, and is contained in an amount of 0.1% to 10% by weight of the total lubricant composition:

[Chemical Formula 1]

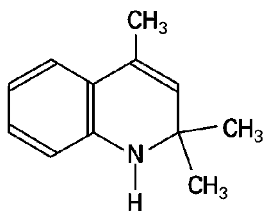

(1)

.

2. The lubricant composition according to claim 1,
wherein the base oil contains the alkyl diphenyl ether oil in an amount of 70% to 90% by weight of the total base oil.

3. The lubricant composition according to claim 2,
wherein the base oil is an oil mixture of the alkyl diphenyl ether oil and the poly-α-olefin oil.

4. The lubricant composition according to claim 1,
wherein the alkyl diphenyl ether oil has a kinetic viscosity at 40°C of 60 to 120 $mm^2/s$.

5. The lubricant composition according to claim 1,
wherein the lubricant composition is a grease containing a urea compound as a thickener.

6. The lubricant composition according to claim 1,
wherein the lubricant composition is used under a high temperature condition of 180°C or higher.

7. A lubricant composition-sealed bearing comprising the lubricant composition according to claim 1 sealed therein.

Fig. 1

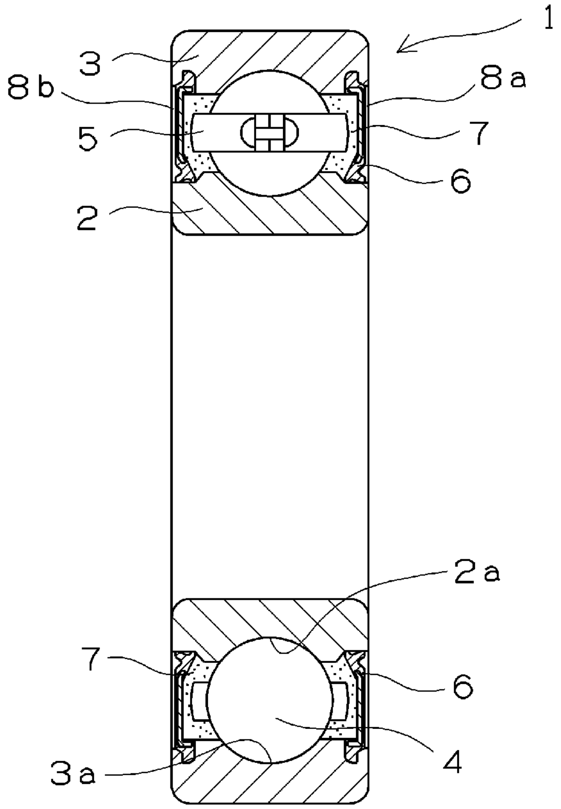

Fig. 2

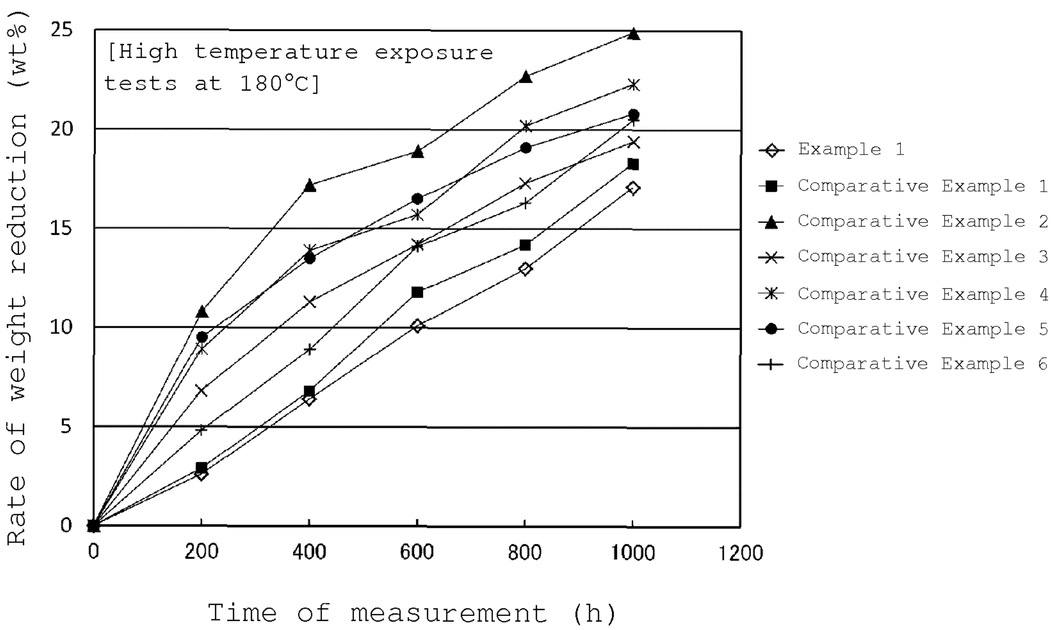
[High temperature exposure tests at 180°C]
Rate of weight reduction (wt%)
25
20
15
10
5
0
0
200
400
600
800
1000
1200
Time of measurement (h)
Example 1
Comparative Example 1
Comparative Example 2
Comparative Example 3
Comparative Example 4
Comparative Example 5
Comparative Example 6

Fig. 3

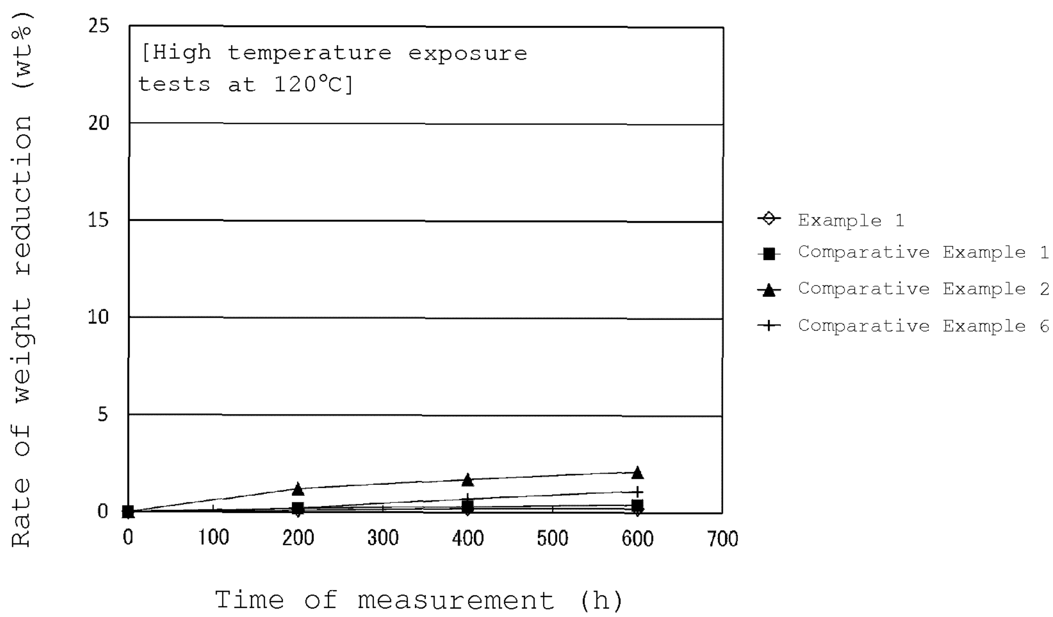
[High temperature exposure tests at 120°C]
Rate of weight reduction (wt%)
25
20
15
10
5
0
0
100
200
300
400
500
600
700
Time of measurement (h)
Example 1
Comparative Example 1
Comparative Example 2
Comparative Example 6

Fig. 4

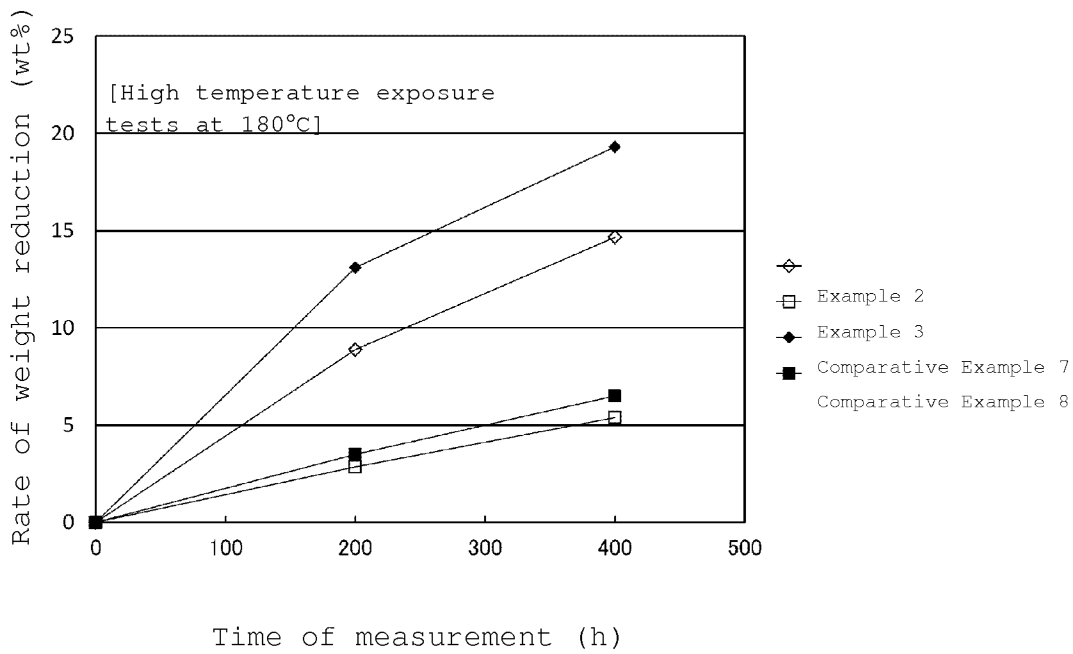
Rate of weight reduction (wt%)
25
20
15
10
5
0
[High temperature exposure tests at 180°C]
0
100
200
300
400
500
Time of measurement (h)
Example 2
Example 3
Comparative Example 7
Comparative Example 8

**INTERNATIONAL SEARCH REPORT**

International application No. PCT/JP2015/068752

A. CLASSIFICATION OF SUBJECT MATTER

*C10M169/04*(2006.01)i, *C10M105/18*(2006.01)i, *C10M107/02*(2006.01)i, *C10M115/08*(2006.01)i, *C10M133/38*(2006.01)i, *F16C19/06*(2006.01)i, *F16C33/66*(2006.01)i, *C10N30/08*(2006.01)n, *C10N40/02*(2006.01)n,

According to International Patent Classification (IPC) or to both national classification and IPC

B. FIELDS SEARCHED

Minimum documentation searched (classification system followed by classification symbols)

C10M169/04, C10M105/18, C10M107/02, C10M115/08, C10M133/38, F16C19/06, F16C33/66, C10N30/08, C10N40/02, C10N50/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

JSTPlus/JMEDPlus/JST7580(JDreamIII), CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2007-238755 A (Kyodo Yushi Co., Ltd.),<br>20 September 2007 (20.09.2007),<br>claims; paragraphs [0011] to [0014]; examples<br>& US 2008/0318819 A1 & WO 2007/102266 A1<br>& EP 1995300 A1 | 1-7<br>1-7 |
| Y | WO 2014/087979 A1 (NSK Ltd.),<br>12 June 2014 (12.06.2014),<br>claims; paragraphs [0017], [0039]; examples<br>(Family: none) | 1-7 |
| Y | JP 2014-108997 A (NSK Ltd. et al.),<br>12 June 2014 (12.06.2014),<br>claims; paragraphs [0011], [0017], [0018], [0020]; examples<br>(Family: none) | 1-7 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 24 July 2015 (24.07.15) | 04 August 2015 (04.08.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/068752

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2007-332330 A (NSK Ltd.), 27 December 2007 (27.12.2007), claims; paragraphs [0010], [0023]; examples (Family: none) | 1-7 |
| Y | JP 1-259097 A (Kyodo Yushi Co., Ltd.), 16 October 1989 (16.10.1989), claims; page 3, upper left column, line 10 to upper right column, line 10; examples (Family: none) | 1-7 |
| Y | JP 2004-506779 A (R.T. Vandarbilt Co., Inc.), 04 March 2004 (04.03.2004), entire text & US 6235686 B1 & WO 2002/014457 A1 & EP 1317520 A1 | 1-7 |

Form PCT/ISA/210 (continuation of second sheet) (July 2009)

**INTERNATIONAL SEARCH REPORT**

International application No.
PCT/JP2015/068752

Continuation of A. CLASSIFICATION OF SUBJECT MATTER
(International Patent Classification (IPC))

*C10N50/10*(2006.01)n

(According to International Patent Classification (IPC) or to both national classification and IPC)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005188557 A
- JP 2012162657 A